# EUROPEAN PATENT SPECIFICATION

(11) **EP 2 516 278 B1**
(45) Date of publication and mention of the grant of the patent: **18.02.2015**
(21) Application number: 11715059.9
(22) Date of filing: 28.02.2011
(51) Int. Cl.: B65C 9/00

(54) **LABELLING MACHINE WITH REMOVABLE LABELLING DEVICE**
ETIKETTIERUNGSMASCHINE MIT ABNEHMBARER ETIKETTIERUNGSVORRICHTUNG
MACHINE D'ÉTIQUETAGE AVEC DISPOSITIF D'ÉTIQUETAGE AMOVIBLE

(43) Date of publication of application: 31.10.2012
(73) Proprietor: Kosme S.r.l. Unipersonale, 46048 Roverbella (MN) (IT)
(72) Inventor: CATTABRIGA, Denis, I - 46043 Castiglione delle Stiviere (MN) (IT)
(74) Representative: Ponchiroli, Simone
(86) International application number: PCT/IT2011/000054
(87) International publication number: WO 2012/117426

(56) References cited:
- DE-U1- 20 310 030
- US-A- 3 806 395
- US-A1- 2005 153 427
- US-A1- 2009 301 662

## Description

This invention relates to a labelling machine according to the preamble of claim 1 equipped with one or more removable labelling devices, allowing a change in the machine configuration. Such a labelling machine is known from US 2005/ 0153427 A1.

In the sector, this type of labelling machine is usually called modular, in the sense that each labelling device is a module which, according to production requirements, may or may not be associated with the carrousel, even in different positions if necessary. Examples of such labelling machines are described in international patent applications WO 2011/027 372 A1 and WO 2011/045 318 A1 in the name of this Applicant, and in patent applications US 2007/204563, US 2009/301662, US 2005/153427 and US 2004/099379. In general, the angular position of the labelling device and its distance from the carrousel are set in advance using special technical solutions for connection/alignment of the various parts. Moreover, each labelling device may rest only on the ground/floor, or partly on the ground and partly on the frame of the labelling machine (US 2009/301662) or on another structure which is fixed relative to the frame (US 2007/204563).

However, consequently, in all of the prior art solutions, vertical alignment between the carrousel and the labelling device depends on the floor on which both rest. A perfectly flat, level floor would not create problems. However, industrial floors in general are not perfectly flat or level. Instead, they tend to have slopes and channels to guarantee water drainage. Therefore, to allow simple levelling of the various parts, all of the prior art interchangeable labelling devices are equipped with height-adjustable supporting means. The supporting means normally consist of a plurality of feet which can be vertically adjusted either manually (for example, by simply screwing) or automatically (for example, using hydraulic, pneumatic or electric actuators). Therefore, each time the labelling device is positioned relative to the carrousel, the supporting means have to be adjusted to achieve the correct levelling. Machines with interchangeable labelling device are designed to allow a series of different labelling operations to be carried out using a single machine (for example, if there is a change in the size of the objects to be labelled), by simply fitting, removing or repositioning the various labelling devices.

This may be a significant disadvantage in terms of both productivity and labour costs.

It is easy to see how the need to perform a new levelling operation each time the device is moved on one hand is very time consuming, with a negative impact on productivity, and on the other hand requires action by suitably skilled personnel for a predetermined time, thus increasing costs. This is the case in particular when the same device must often be moved to various positions around the carrousel.

Another problem, if the supporting means of the devices are manually operated, is that in many applications access to the supporting means located close to the carrousel may be difficult or even impossible. In particular, when there are many devices around a single carrousel, the devices may be practically alongside each other.

Since labelling devices are relatively heavy, in some solutions as well as the supporting means described, the devices have a plurality of wheels for transporting them, the wheels being positioned in such a way that they remain raised off the ground while the device is operating. However, in that case, for each movement the supporting means must be retracted upwards so that the wheels rest on the ground, representing a further disadvantage in terms of the time needed for the next new levelling operation especially if the device is subsequently returned to the same position.

In contrast, regarding devices designed to be partly supported either by the frame of the machine or by another structure which is fixed relative to the frame (see US 2009/301662 and US 2007/204563), a further disadvantage is the fact that the modules can never be detached from the machine, since they are unable to support themselves. Therefore, in that case, the various devices can only be positioned in various positions relative to the carrousel, limiting the versatility of the labelling machine.

In this situation the technical purpose which forms the basis of this invention is to provide a labelling machine with a removable labelling device which overcomes the above-mentioned disadvantages.

In particular, the technical purpose of this invention is to provide a labelling machine with a removable labelling device which allows simplification of the operations for levelling the device relative to the carrousel.

This invention also has for a technical purpose to provide a labelling machine with a removable labelling device which allows the levelling operations to be performed only once if the module must always be positioned in the same position relative to the carrousel.

This invention also has for a technical purpose to provide a labelling machine with a removable labelling device which also allows the removal even of labelling devices which are designed to be partly supported either by the frame of the machine or by another structure which is fixed relative to the frame.

The technical purpose specified and the aims indicated are substantially achieved by a labelling machine with a removable labelling device made as described in the appended independent claims.

Further features and the advantages of this invention are more apparent in the detailed description, with reference to the accompanying drawings which illustrate several preferred, non-limiting embodiments of a labelling machine with a removable labelling device, in which:
- Figure 1 is a side view, with some parts schematically illustrated, of a labelling machine made in accordance with this invention;
- Figure 2 is an axonometric top view of the lower part of a labelling device of the machine of Figure 1;
- Figure 3 is an axonometric bottom view of an alternative embodiment of the lower part of the device of Figure 2;
- Figure 4 is an axonometric top view of a second alternative embodiment of the device of Figure 2;
- Figure 5 is an axonometric bottom view of a third alternative embodiment of the device of Figure 2;
- Figure 6 is an axonometric top view of a supporting structure for any of the devices of Figures 2 to 4;
- Figure 7 is an axonometric top view of the lower part of the labelling device of Figure 2 resting on the supporting structure of Figure 6;
- Figure 8 is a side view of Figure 7;
- Figure 9 is an axonometric top view of a device similar to that of Figure 5 resting on an alternative embodiment of the supporting structure of Figure 6;
- Figure 10 is an axonometric bottom view of a further alternative embodiment of the device of Figure 2;
- Figure 11 is an axonometric top view of the device of Figure 10 in a different operating configuration;
- Figure 12 is an axonometric view of a labelling machine without labelling devices;
- Figure 13 is an axonometric view of the labelling machine of Figure 11 with the labelling device of Figure 2 coupled to it; and
- Figure 14 shows a step of transferring the labelling device of Figure 2 (again shown without the upper part) between the condition of Figure 7 and that of Figure 13.

With reference to the accompanying drawings, the numeral 1 denotes in its entirety a labelling machine equipped with at least one removable labelling device 2 made in accordance with this invention. Although for simplicity the accompanying drawings only show a machine 1 equipped with a single labelling device 2, this invention may advantageously be applied even to machine equipped with any number of labelling devices 2.

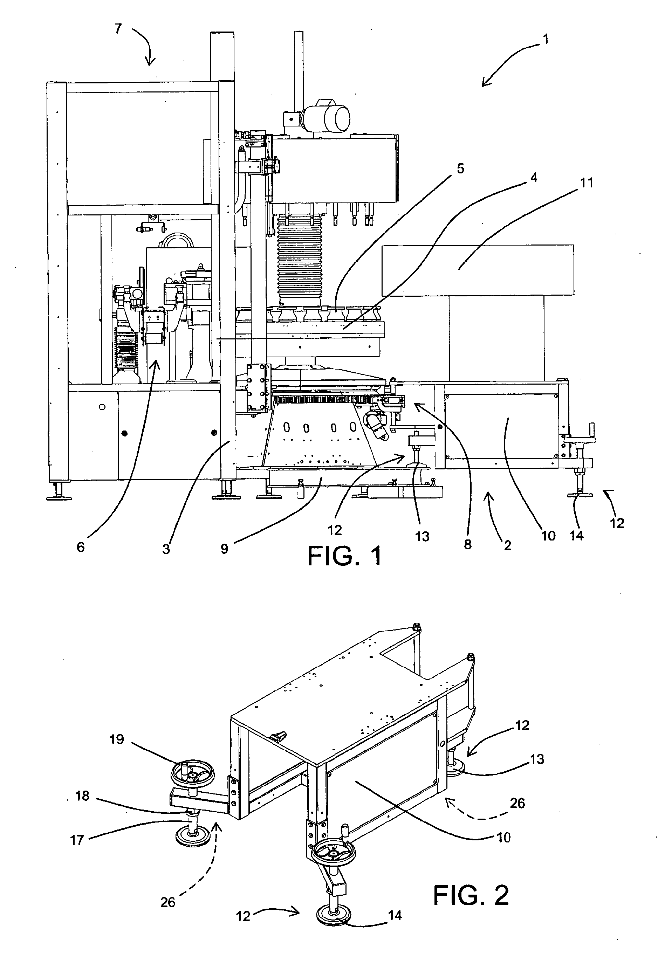

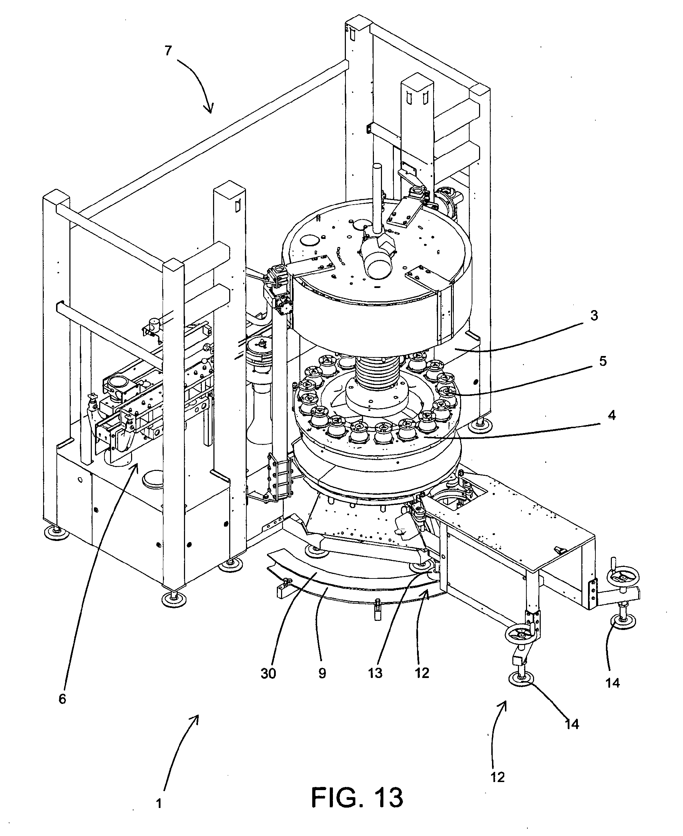

With reference to Figures 1, 12 and 13, in the known way the labelling machine 1 in general comprises at least a main supporting frame 3, a carrousel 4 rotatably mounted on the main supporting frame 3 according to a substantially vertical main axis of rotation and equipped on its periphery with sustaining means for the objects to be labelled, and at least one labelling device 2 (supporting plates 5 in the embodiment illustrated).

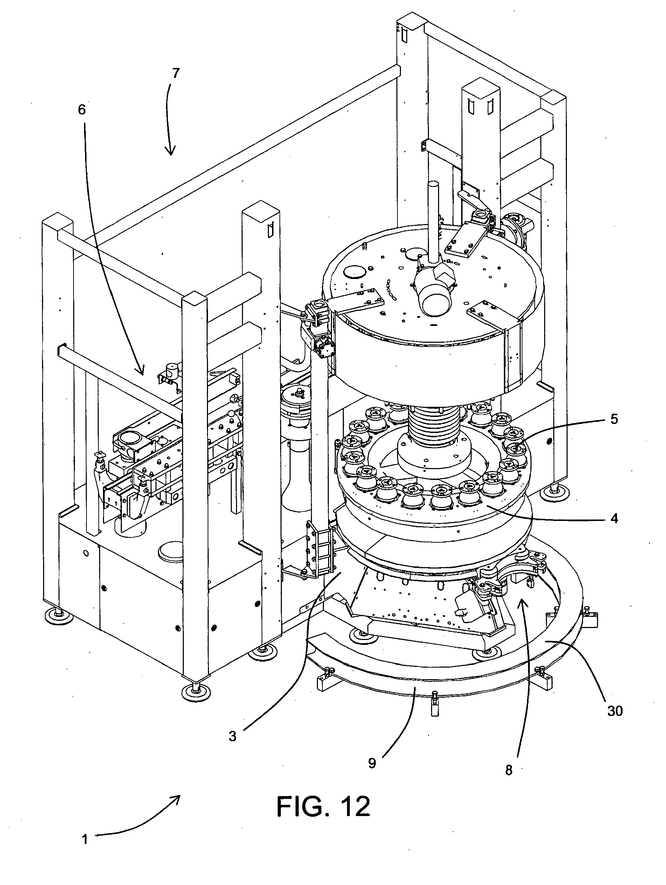

In the embodiment illustrated the machine 1 also comprises means 6 for feeding the products to be labelled and for picking up labelled products which are also mounted on the main supporting frame 3 (in particular on the portion 7 of the frame which has the shape of a parallelepiped, visible in Figure 12). Since for the carrousel 4, the means 6 for feeding the products to be labelled and for picking up the labelled products solutions are used which are known to experts in the field, not forming part of the subject matter of this invention, they are not described in further detail.

The labelling device 2 can move at least between a non-operating position in which it is distanced from the carrousel 4 and uncoupled from it, and at least one operating position in which it is removably associated with the periphery of the carrousel 4 for, in practice, allowing the labelling device to label the objects supported by the sustaining means as they pass the labelling device.

However, advantageously, the labelling device 2 can move between the non-operating position and a plurality of operating positions, at each of which it is in a different angular position relative to the main axis of rotation of the carrousel 4. In the embodiment illustrated, to guarantee correct radial positioning and centring relative to the carrousel 4, the machine 1 illustrated also comprises, for each labelling device 2, coupling and centring means 8 which are fixed to the main supporting frame 3. The coupling and centring means 8 can move freely along the extension of the carrousel 4 and allow free positioning of the labelling device 2 at any angular position. The coupling and centring means 8 are described in detail in patent application WO 2011/027 372 A1 by this Applicant, which should be consulted.

Moreover, in the embodiment illustrated, as described in more detail below, the labelling device 2 is of the type designed to rest partly on the ground and partly on a positioning unit 9 which is fixed relative to the main supporting frame 3 of the machine 1. That does not prevent this invention from also being applicable to devices 2 designed to rest exclusively on the ground.

As shown in Figure 1, in the known way the labelling device 2 comprises a lower body 10, labelling means 11 mounted on the lower body 10 and first, height-adjustable supporting means 12 associated with the lower body 10 and designed to autonomously support the device 2 when it is associated with the carrousel 4. Since the labelling means 11 are of the known type and may have any structure depending on the requirements (for example, depending on the size of the labels to be applied, whether or not the labels are self-adhesive, etc.) they are shown only in Figure 1 and only schematically.

In the embodiments illustrated, the first supporting means 12 comprise both first resting elements 13 and second resting elements 14. The first resting elements 13 are positioned on the side of the device 2 which faces the carrousel 4, whilst the second resting elements 14 are positioned on the opposite side.

Depending on requirements, the height adjustment of the various resting elements 13, 14 may be achieved in any way. However, in the embodiments illustrated, the first resting elements 13 can be adjusted manually by screwing their first supporting rod 15 then locking with suitable first nuts 16. This is because, as described in more detail below, in all of the embodiments illustrated, adjustment of the first resting elements 13 may be performed once.

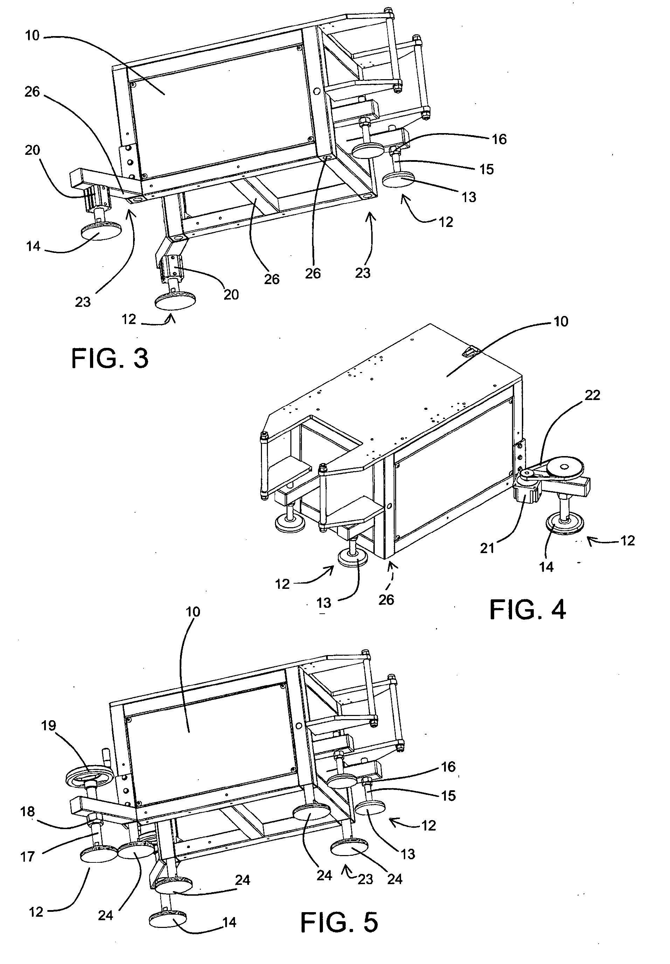

As regards the second resting elements 14, various possible alternative embodiments are shown in the accompanying drawings. In the case in Figures 2, 5 and 9 to 11, for example, the second resting elements 14 are adjusted manually by manually screwing a relative second supporting rod 17 and locking it in position with suitable second nuts 18. To make screwing easier, the top of each second rod 17 is provided with a handwheel 19. In contrast, in the case in Figure 3 each second resting element 14 comprises a hydraulic, pneumatic or electromechanical actuator 20. Instead, in the embodiment in Figure 4, an electric motor 21 connected by a driving belt 22 controls screwing of the second rod 17 of each second resting element 14.

In accordance with this invention, as well as the first supporting means 12 described above, the labelling device 2 comprises second supporting means 23 designed to autonomously support the device 2 when it is not associated with the carrousel 4, and which can be switched between a first configuration in which they allow the labelling device 2 to be supported solely by the first supporting means 12 and a second configuration in which they completely and autonomously support the labelling device 2 irrespective of the height adjustment of the first supporting means 12. This means that, whatever the height adjustment of the first supporting means 12, it is possible to configure the second resting means in such a way that they completely support the labelling device 2, preventing contact between the first supporting means 12 and the floor.

In this way, the second supporting means 23 allow the labelling device 2 to be put in the non-operating position without having to change the adjustment of the first supporting means 12.

Depending on the embodiments, there are two main types of second supporting means 23: a first type in which the supporting means are completely mounted on the labelling device 2, and a second type in which the second supporting means 23 are partly fixed to the labelling device 2 and partly positioned in the device 2 non-operating position.

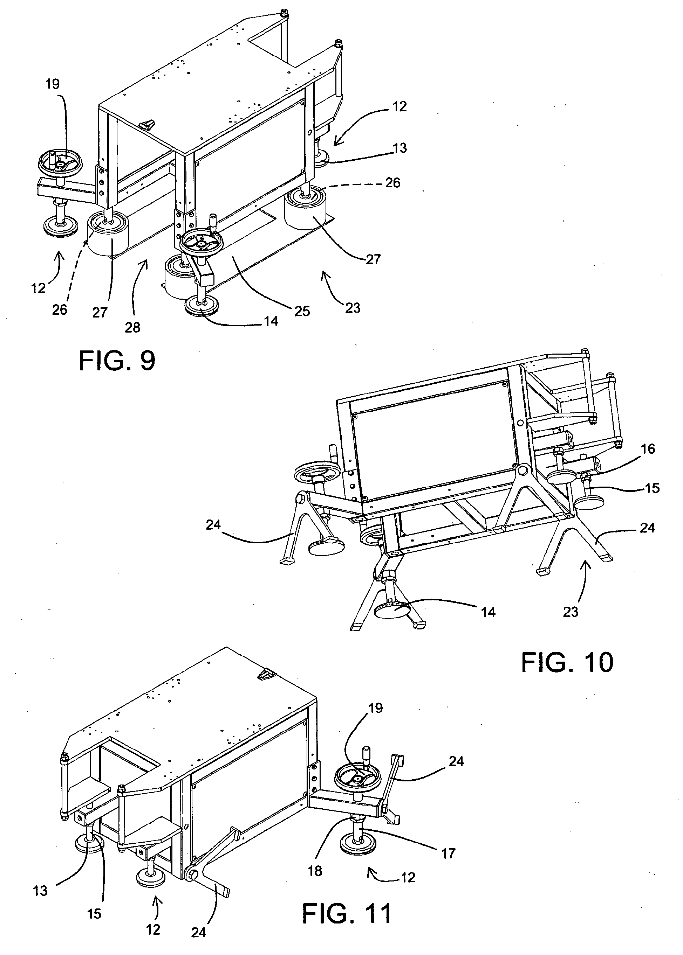

Regarding the first type, the second supporting means 23 comprise a plurality of resting feet 24 which can move between a first position defining the first configuration and a second position defining the second configuration. A first example of this is shown in Figures 10 and 11, where the resting feet 24 can move between the first and second positions by rotating about a secondary axis which in practice is substantially horizontal. It can be seen how each resting foot 24 has the shape of an overturned "V" with the vertex hinged to the lower body 10. However, obviously, said resting feet 24 may also have other shapes. A second example is shown in Figure 5, where the resting feet 24 can be height-adjusted relative to the lower body 10 (in the same ways as described above relative to the resting elements), and therefore are able to move between an upper height in which they are higher than the second resting elements 14, and a lower height in which they are lower than them.

In contrast, regarding the second type, the second supporting means 23 comprise on one hand at least one supporting structure 25 which can rest on the ground in the non-operating position, and on the other at least one resting portion 26 (advantageously more than one) which is fixed to the lower body 10 of the labelling device 2. Each resting portion 26 may comprise either directly a part of the lower body 10 (Figures 2 to 8) or a fixed foot which is fixed to the lower body 10 (Figure 9 - these feet are the same as those of Figure 5 except for the fact that they are not height-adjustable). Each resting portion 26 is also designed to be rested on the supporting structure 25 when the labelling device 2 is in the non-operating position. Consequently, in the first configuration of the second supporting means 23, the resting portion 26 is uncoupled from the supporting structure 25 whilst, in the second configuration of the second supporting means 23, the resting portion 26 rests on the supporting structure 25.

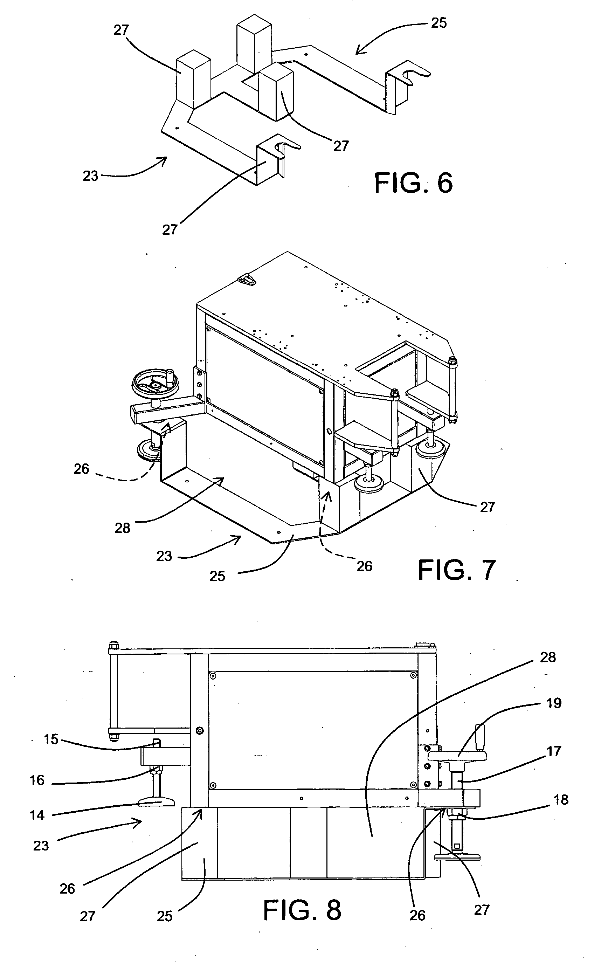

Two examples of the supporting structure 25 are shown respectively in Figures 6 to 8 and in Figure 9.

Advantageously, the supporting structure 25 comprises a plurality of supporting elements 27 extending vertically and connected to each other, on which the resting portions 26 can rest.

In the preferred embodiment, when the labelling device 2 is resting on the supporting structure 25 the latter forms, below the labelling device 2, an empty space 28 which can be accessed from at least one side, and which is designed to allow the insertion of lifting means under the labelling device 2.

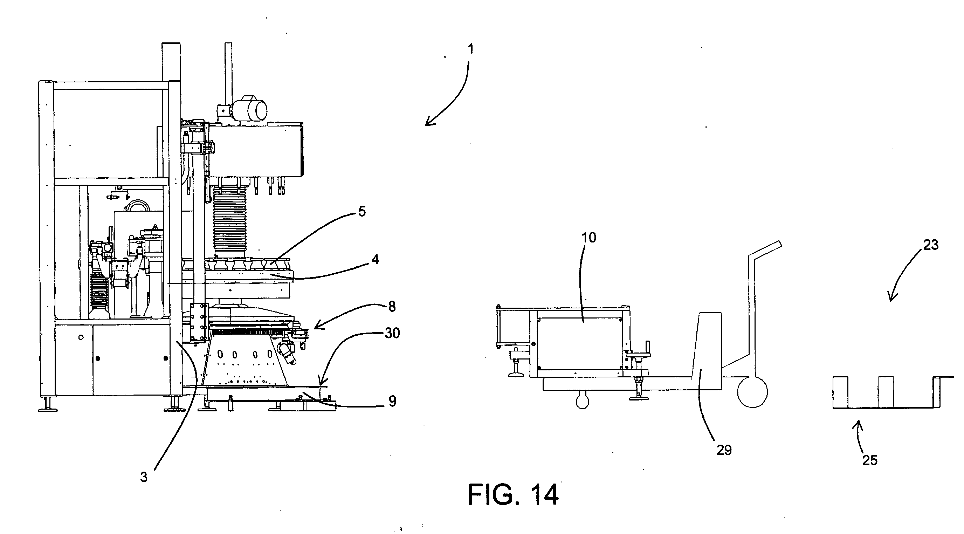

In this way, as shown in Figure 14, the labelling device 2 can be moved from the non-operating position to the operating position (and vice versa) easily with the aid of lifting means, such as a pallet truck 29.

As already indicated, in the preferred embodiment illustrated in the accompanying drawings, the labelling machine 1 also comprises at least one positioning unit 9 which is fixed relative to the frame 3, on which the first resting elements 13 rest when the labelling device 2 is in the operating position.

In the embodiment illustrated the positioning unit 9 comprises an arched section bar fixed to the ground at the carrousel 4. However, in other embodiments, the positioning unit 9 may be an integral part of the main supporting frame 3 or fixed to it.

When the labelling device 2 is in the operating position, and the first resting elements 13 are resting on the positioning unit 9, each second resting element 14 is positioned at a height lower than each first resting element 13.

Depending on the embodiments, the machine 1 may comprise either a single positioning unit 9 extending along the extension of the carrousel 4 and which allows the first resting elements 13 to rest at a plurality of different angular positions relative to the main axis of rotation (Figure 12), or a plurality of separate positioning units 9 for allowing resting of the first resting elements 13 and which are positioned at a plurality of different angular positions relative to the main axis of rotation (solution not illustrated, but which corresponds for example to the division of the positioning unit 9 of Figure 12 into several separate pieces). However, in both cases, at each of said angular positions each positioning unit 9 has the same relative positioning and distance relative to the carrousel 4. In the embodiment illustrated this is achieved by simply ensuring that at each angular position the positioning unit 9 has a resting surface 30 for the first supporting means 12 which lies in a single plane and which is parallel with the plane in which the carrousel 4 lies (both of said planes are substantially horizontal). In this way, the first resting elements 13 can maintain the same adjustment at each of said angular positions, so that it is enough to adjust them only once during the first installation of the labelling device 2.

This invention also relates to two methods for repeatedly changing the configuration of a labelling machine 1 of the type described above.

The first method relates to machines in which a specific labelling device 2 may or may not be present, but in which the device 2 must be mounted repeatedly at the same angular position relative to the main axis of rotation. That method can be applied to any machine 1 according to this invention and comprises a first operating step in which the labelling device 2 is associated for the first time with the carrousel 4 at a predetermined operating position and during which it is levelled relative to the carrousel 4 using the first supporting means 12. Therefore, at the end of that first operating step a first operating configuration of the labelling machine 1 is obtained. When, to obtain a second operating configuration of the labelling machine 1, the device 2 must be removed, the method comprises the operating step of moving it to the non-operating position while at the same time maintaining unchanged the adjustment of the first supporting means 12 and preventing them from supporting the device 2 (which instead is supported only by the second supporting means 23).

Finally, when the labelling machine 1 first configuration is required again, the method comprises the operating step of returning the device 2 to the operating position, again maintaining unchanged the adjustment of the first supporting means 12.

In contrast, the second method can be applied when the machine 1 is equipped with one or more positioning units 9 which allow the labelling device 2 to be mounted at a plurality of different angular positions and which, at said separate angular positions, have the same relative positioning and distance relative to the carrousel 4.

In this case, to obtain a labelling machine 1 first configuration, the method comprises a first operating step in which the labelling device 2 is associated with the carrousel 4 at its first operating position and is levelled relative to the carrousel 4 using the first supporting means 12. In contrast, to obtain a labelling machine 1 second configuration corresponding to a different positioning of the labelling device 2 relative to the axis of rotation, the method comprises the operating step of moving the device 2 to a second operating position, maintaining unchanged the adjustment of each first resting element 13 which must rest on the positioning unit 9, and instead changing, if necessary, only the adjustment of each second resting element 14.

Obviously, this method may also be applied in the case in which between one operating position and another the device 2 is temporarily kept in the non-operating position. In that position, the adjustment of the first supporting means 12 is not modified.

This invention brings important advantages.

First, a labelling machine made in accordance with this invention allows simplification of the operations for levelling the device relative to the carrousel with each configuration change, since a new levelling operation can be entirely or partly avoided.

Second, if the labelling device must always be placed in the same position relative to the carrousel, thanks to this invention it is possible to perform the levelling operations only once. During the period when it is not used, said adjustment does not have to be modified thanks to the use of the second supporting means for sustaining the device.

Moreover, a labelling machine made in accordance with this invention allows the momentary removal even of labelling devices designed, in practice, to be partly supported either by the machine frame or by another structure which is fixed relative to the frame, significantly increasing the versatility of the machine.

Finally, it should be noticed that this invention is relatively easy to produce and that even the cost linked to implementing the invention is not very high.

Moreover, all details of the invention may be substituted with other technically equivalent elements and the materials used, as well as the shapes and dimensions of the various components, may vary according to requirements within the scope of the appended claims.

## Claims

1. A labelling machine comprising:
a main supporting frame (3);
a carrousel (4) rotatably mounted on the main supporting frame (3) according to a substantially vertical main axis of rotation, the periphery of the carrousel being equipped with sustaining means for the objects to be labelled; and
at least one labelling device (2) able to move at least between a non-operating position in which it is distanced from the carrousel (4) and uncoupled from it, and at least one operating position in which it is removably associated with the periphery of the carrousel (4) for, in practice, allowing the labelling device (2) to label the objects supported by the sustaining means as they pass labelling device;
the labelling device (2) comprising a lower body (10), labelling means (11) mounted on the lower body (10) and first, height-adjustable supporting means (12) associated with the lower body (10) and designed to autonomously support the labelling device (2) when it is associated with the carrousel (4),
**characterised in that** the labelling device (2) further comprises second supporting means (23) designed to autonomously support the labelling device (2) when the labelling device (2) is not associated with the carrousel (4) and is in the non-operating position,
wherein the second supporting means (23) can be switched with respect to the rest of the labelling device (2) between a first configuration in which they allow the labelling device (2) to be supported solely by the first supporting means (12) and a second configuration in which they completely and autonomously support the labelling device (2) and its lower body (10) and first supporting means (12), irrespective of the height adjustment of the first supporting means (12), in such a way as to allow the labelling device (2) with its lower body (10) and first supporting means (12), to be put in the non-operating position without having to change the adjustment of the first supporting means (12).

2. The labelling machine according to claim 1, **characterised in that** it also comprises at least one positioning unit (9) which is fixed relative to the frame and also being **characterised in that** the first supporting means (12) comprise one or more first resting elements (13) and one or more second resting elements (14) which are height-adjustable to allow labelling device (2) levelling, and also being **characterised in that**, when the labelling device (2) is in the operating position, each first resting element (13) rests on the positioning unit (9) and is closer to the main axis of rotation than each second resting element (14), and also being **characterised in that**, when the labelling device (2) is in the operating position, each second resting element (14) is positioned at a height lower than each first resting element (13).

3. The labelling machine according to claim 2, **characterised in that** it comprises either a single positioning unit (9) extending along the extension of the carrousel (4) and allowing the first resting elements (13) to rest at a plurality of different angular positions relative to the main axis of rotation, or a plurality of separate positioning units (9) allowing resting of the first resting elements (13) and which are placed at a plurality of different angular positions relative to the main axis of rotation, and also being **characterised in that** at each of said angular positions each positioning unit (9) has the same relative positioning and distance relative to the carrousel (4), in such a way that the first resting elements (13) can maintain the same adjustment at each of said angular positions.

4. The labeling machine according to any of the foregoing claims, **characterised in that** the second supporting means (23) comprise at least one supporting structure (25) which can rest on the ground in the nonoperating position, and at least one resting portion (26) which is fixed to the lower body (10) and can rest on the supporting structure (25) when the labelling device (2) is in the non-operating position, and also being **characterised in that** in the first configuration of the second supporting means (23), the resting portion (26) is uncoupled from the supporting structure (25) whilst, in the second configuration of the second supporting means (23), the resting portion (26) rests on the supporting structure (25).

5. The labelling machine according to claim 4, **characterised in that** the supporting structure (25) comprises a plurality of supporting elements (27) extending vertically and connected to each other, and also being **characterised in that** the lower body (10) comprises a plurality of resting portions (26) which can rest on the supporting elements (27).

6. The labelling machine according to claim 4 or 5, **characterised in that** each resting portion (26) is formed by a foot fixed to the lower body (10).

7. The labelling machine according to claim 4, 5 or 6, **characterised in that** when the labelling device (2) is resting on the supporting structure (25) the latter forms, below the labelling device (2), an empty space (28) which can be accessed from at least one side, allowing the insertion of lifting means under the labelling device (2).

8. The labelling machine according to any of the claims from 1 to 3, **characterised in that** the second supporting means (23) comprise a plurality of resting feet (24) which can move between a first position defining the first configuration and a second position defining the second configuration.

9. The labelling machine according to claim 8, **characterised in that** the resting feet (24) can move between the first and second positions by rotating about a secondary axis which in practice is substantially horizontal.

10. The labelling machine according to any of the foregoing claims, **characterised in that** the labelling device (2) can move between the non-operating position and a plurality of operating positions, at each of which it is in a different angular position relative to the main axis of rotation.

11. The labelling machine according to any of the foregoing claims, **characterised in that** it comprises, for each labelling device (2), coupling and centring means (8) which are fixed to the main supporting frame (3).

12. A method for repeatedly changing the configuration of a labelling machine (1) according to any of the foregoing claims, comprising the operating steps of:
associating the labelling device (2) with the carrousel (4) at the operating position and levelling it relative to the carrousel (4) using the first supporting means (12), to obtain a first operating configuration of the labelling machine (1);
moving the device (2) to the non-operating position to obtain a second operating configuration of the labelling machine (1);
returning the device (2) to the operating position to again obtain the first configuration of the labelling machine (1);
**characterised in that** when the device (2) is moved to the non-operating position the adjustment of the first supporting means (12) is maintained unchanged and they are prevented from supporting the device (2), and also being **characterised in that** the adjustment of the first supporting means (12) is also maintained unchanged when the device (2) is subsequently returned to the operating position.

13. The method for changing the configuration of a labelling machine (1) according to claims 2 and 10, comprising in sequence the operating steps of:
associating the labelling device (2) with the carrousel (4) at its first operating position and levelling it relative to the carrousel (4) using the first supporting means (12), thus obtaining a first configuration of the labelling machine (1);
moving the device (2) to a second operating position, thus obtaining a second configuration of the labelling machine (1);
**characterised in that** when the device (2) is moved to the second operating position the adjustment of each first resting element (13) is maintained unchanged, whilst if necessary only the adjustment of each second resting element (14) is changed.

## Patentansprüche

1. Etikettiermaschine, enthaltend:
einen Hauptträgerrahmen (3);
eine drehbares Karussell (4), montiert an dem Hauptträgerrahmen (3) in Übereinstimmung mit einer im wesentlichen vertikalen Hauptdrehachse, wobei das Karussell an seinem Umfang mit Haltemitteln für die zu etikettierenden Gegenstände versehen ist; und
wenigstens eine Etikettiervorrichtung (2), in der Lage, sich wenigstens zwischen einer Ruheposition, in welcher sie sich von dem Karussell (4) entfernt befindet, und wenigstens einer Betriebsposition zu bewegen, in welcher sie lösbar dem Umfang des Karussells (4) zugeordnet ist, um es praktisch der Etikettiervorrichtung (2) zu erlauben, die von den Haltemitteln getragenen Gegenstände zu etikettieren, wenn sie an der Etikettiervorrichtung vorbeilaufen;
wobei die Etikettiervorrichtung (2) einen unteren Körper (10) enthält, sowie an dem unteren Körper (10) montierte Etikettiermittel (11) und erste höhenregulierbare Trägermittel (12), zugeordnet dem unteren Körper (10) und dazu bestimmt, eigenständig die Etikettiervorrichtung (2) zu tragen, wenn diese dem Karussell (4) zugeordnet ist,
**dadurch gekennzeichnet, dass** die Etikettiervorrichtung (2) ausserdem zweite Trägermittel (23) enthält, dazu bestimmt, eigenständig die Etikettiervorrichtung (2) zu tragen, wenn die Etikettiervorrichtung (2) nicht dem Karussell (4) zugeordnet ist und sich in der Ruheposition befindet, wobei die zweiten Trägermittel (23) entsprechend der Ruheposition der Etikettiervorrichtung (2) zwischen einer ersten Konfiguration, in welcher sie es der Etikettiervorrichtung (2) erlauben, nur von den ersten Trägermitteln (12) gehalten zu werden, und einer zweiten Konfiguration, in welcher sie vollkommen und eigenständig die Etikettiervorrichtung (2) und deren unteren Körper (10) sowie die ersten Trägermittel (12) halten, umgeschaltet werden können ungeachtet der Höhenregulierung der ersten Trägermittel (12), und zwar auf solche Weise, dass es der Etikettiervorrichtung (2) mit ihrem unterem Körper (10) und den ersten Trägermitteln (12) erlaubt ist, in die Ruheposition gebracht zu werden, ohne dass die Regulierung der ersten Trägermittel (12) geändert werden muss.

2. Etikettiermaschine nach Patentanspruch 1, **dadurch gekennzeichnet, dass** sie ebenfalls wenigstens eine Positioniereinheit (9) enthält, welche im Verhältnis zu dem Rahmen feststehend ist, und auch **dadurch gekennzeichnet, dass** die ersten Trägermittel (12) ein oder mehrere erste Stützelemente (13) und ein oder mehrere zweite Stützelemente (14) enthalten, welche höhenregulierbar sind, um die Nivellierung der Etikettiervorrichtung (2) zu erlauben, und auch **dadurch gekennzeichnet, dass**, wenn sich die Etikettiervorrichtung (2) in der Betriebsposition befindet, jedes erste Stützelement (13) auf der Positioniereinheit (9) ruht und dichter an der Hauptdrehachse liegt als jedes zweite Stützelement (14), und auch **dadurch gekennzeichnet, dass**, wenn sich die Etikettiervorrichtung (2) in der Betriebsposition befindet, jedes zweite Stützelement (14) auf einer geringeren Höhe positioniert ist als jedes erste Stützelement (13).

3. Etikettiermaschine nach Patentanspruch 2, **dadurch gekennzeichnet, dass** sie entweder eine einzige Positioniereinheit (9) enthält, die sich entlang der Ausdehnung des Karussells (4) erstreckt und es den ersten Stützelementen (13) erlaubt, in einer Anzahl von unterschiedlichen Winkelpositionen im Verhältnis zu der Hauptdrehachse aufzuliegen, oder eine Anzahl von getrennten Positioniereinheiten (9), die das Aufliegen der ersten Stützelemente (13) erlauben, und welche in einer Anzahl von unterschiedlichen Winkelpositionen im Verhältnis zu der Hauptdrehachse angeordnet sind, und auch **dadurch gekennzeichnet, dass** in jeder der genannten Winkelpositionen jede Positioniereinheit (9) dieselbe entsprechende Positionierung und den entsprechenden Abstand zu dem Karussell (4) hat, und zwar auf solche Weise, dass die ersten Stützelemente (13) die gleiche Regulierung in jeder der genannten Winkelpositionen beibehalten können.

4. Etikettiermaschine nach einem jeden der vorstehenden Patentansprüche, **dadurch gekennzeichnet, dass** die zweiten Trägermittel (23) wenigstens eine Trägerstruktur (25) enthalten, welche in der Ruheposition auf dem Boden aufliegen kann, und wenigstens einen Stützabschnitt (26), welcher an dem unteren Körper (10) befestigt ist und auf der Trägerstruktur (25) aufliegen kann, wenn sich die Etikettiervorrichtung (2) in der Ruheposition befindet, und auch **dadurch gekennzeichnet, dass** in der ersten Konfiguration der zweiten Trägermittel (23) der Stützabschnitt (26) von der Trägerstruktur (25) abgekoppelt ist, während in der zweiten Konfiguration der zweiten Trägermittel (23) der Stützabschnitt (26) auf der Trägerstruktur (25) aufliegt.

5. Etikettiermaschine nach Patentanspruch 4, **dadurch gekennzeichnet, dass** die Trägerstruktur (25) eine Anzahl von Trägerelementen (27) enthält, die sich vertikal erstrecken und miteinander verbunden sind, und auch **dadurch gekennzeichnet, dass** der untere Körper (10) eine Anzahl von Stützabschnitten (26) enthält, welche auf den Trägerelementen (27) aufliegen können.

6. Etikettiermaschine nach Patentanspruch 4 oder 5, **dadurch gekennzeichnet, dass** jeder Stützabschnitt (26) aus einem an dem unteren Körper (10) befestigten Fuss gebildet ist.

7. Etikettiermaschine nach Patentanspruch 4, 5 oder 6, **dadurch gekennzeichnet, dass**, wenn die Etikettiervorrichtung (2) auf der Trägerstruktur (25) liegt, letztere unter der Etikettiervorrichtung (2) einen Leerraum (28) bildet, welcher von wenigstens einer Seite her zugänglich ist, um das Einschieben von Hebemitteln bis unter die Etikettiervorrichtung (2) zu erlauben.

8. Etikettiermaschine nach einem jeden der Patentansprüche von 1 bis 3, **dadurch gekennzeichnet, dass** die zweiten Trägermittel (23) eine Anzahl von Stützfüssen (24) enthält, welche sich zwischen einer ersten, die erste Konfiguration beschreibenden Position, und einer zweiten, die zweite Konfiguration beschreibenden Position bewegen können.

9. Etikettiermaschine nach Patentanspruch 8, **dadurch gekennzeichnet, dass** sich die Stützfüsse (24) zwischen den ersten und zweiten Positionen bewegen können, und zwar durch die Umdrehung um eine sekundäre Achse, welche praktisch im wesentlichen horizontal ist.

10. Etikettiermaschine nach einem jeden der vorstehenden Patentansprüche, **dadurch gekennzeichnet, dass** sich die Etikettiervorrichtung (2) zwischen der Ruheposition und einer Anzahl von Betriebspositionen bewegen kann, wobei sie in jeder von diesen in einer anderen Winkelposition im Verhältnis zu der Hauptdrehachse positioniert ist.

11. Etikettiermaschine nach einem jeden der vorstehenden Patentansprüche, **dadurch gekennzeichnet, dass** sie für jede Etikettiervorrichtung (2) Kupplungs- und Zentriermittel (8) enthält, welche an dem Hauptträgerrahmen (3) befestigt sind.

12. Verfahren zum wiederholten Wechseln der Konfiguration einer Etikettiermaschine (1) nach einem jeden der vorstehenden Patentansprüche, enthaltend die folgenden Phasen:
Zuordnen der Etikettiervorrichtung (2) zu dem Karussell (4) entsprechend einer Betriebsposition und Nivellieren derselben im Verhältnis zu dem Karussell (4) unter Verwendung der ersten Trägermittel (12), um eine erste Betriebskonfiguration der Etikettiermaschine zu erhalten;
Bewegen der Vorrichtung (2) in die Ruheposition, um eine zweite Betriebskonfiguration der Etikettiermaschine (1) zu erhalten;
Zurückfahren der Vorrichtung (2) in die Betriebsposition, um wieder die erste Konfiguration der Etikettiermaschine (1) zu erhalten;
**dadurch gekennzeichnet, dass**, wenn die Vorrichtung (2) in die Ruheposition bewegt worden ist, die Regulierung der ersten Trägermittel (12) unverändert beibehalten wird und diese am Tragen der Vorrichtung (2) gehindert sind, und auch **dadurch gekennzeichnet, dass** die Regulierung der ersten Trägermittel (12) ebenfalls unverändert beibehalten wird, wenn die Vorrichtung (2) anschliessend in die Betriebsposition zurückfährt.

13. Verfahren zum Wechsel der Konfiguration einer Etikettiermaschine (1) nach den Patentansprüchen 2 und 10, enthaltend aufeinanderfolgend die folgenden Phasen:
Zuordnen der Etikettiervorrichtung (2) zu dem Karussell (4) entsprechend der ersten Betriebsposition und Nivellieren derselben im Verhältnis zu dem Karussell (4) unter Verwerdung der ersten Trägermittel (12), um somit eine erste Konfiguration der Etikettiermaschine (1) zu erhalten;
Bewegen der Vorrichtung (2) in eine zweite Betriebsposition, um somit eine zweite Konfiguration der Etikettiermaschine (1) zu erhalten;
**dadurch gekennzeichnet, dass**, wenn die Vorrichtung (2) in die zweite Betriebsposition bewegt worden ist, die Regulierung eines jeden ersten Stützelementes (13) unverändert beibehalten wird, während, falls notwendig, nur die Regulierung eines jeden zweiten Stützelementes (14) verändert wird.

## Revendications

1. Une machine d'étiquetage comprenant :
un châssis de support principal (3) ;
un carrousel (4) monté de façon rotative sur le châssis de support principal (3) selon un axe principal de rotation essentiellement vertical, le pourtour dudit carrousel étant équipé de moyens de soutien pour les objets à étiqueter ; et
au moins un dispositif d'étiquetage (2) pouvant se déplacer au moins entre une position non opérationnelle dans laquelle il est espacé du carrousel (4) et désaccouplé de ce dernier, et au moins une position opérationnelle dans laquelle il est associé de façon amovible au pourtour dudit carrousel (4) pour, dans la pratique, permettre au dispositif d'étiquetage (2) d'étiqueter les objets supportés par les moyens de soutien quand ils passent au niveau du dispositif d'étiquetage ;
le dispositif d'étiquetage (2) comprenant un corps inférieur (10), des moyens d'étiquetage (11) montés sur ledit corps inférieur (10) et des premiers moyens de support (12), réglables en hauteur, associés audit corps inférieur (10) et destinés à supporter de façon autonome le dispositif d'étiquetage (2) quand celui-ci est associé au carrousel (4),
**caractérisée en ce que** le dispositif d'étiquetage (2) comprend en outre des deuxièmes moyens de support (23) destinés à supporter de façon autonome le dispositif d'étiquetage (2) quand ce même dispositif d'étiquetage (2) n'est pas associé au carrousel (4) et est dans la position non opérationnelle,
où les deuxièmes moyens de support (23) peuvent être commutés par rapport au reste du dispositif d'étiquetage (2) entre une première configuration dans laquelle ils permettent au dispositif d'étiquetage (2) d'être supporté uniquement par les premiers moyens de support (12) et une deuxième configuration dans laquelle ils supportent complètement et de façon autonome le dispositif d'étiquetage (2) et son corps inférieur (10) et les premiers moyens de support (12), indépendamment du réglage en hauteur des premiers moyens de support (12), de manière à permettre le positionnement du dispositif d'étiquetage (2) avec son corps inférieur (10) et les premiers moyens de support (12) dans la position non opérationnelle sans devoir changer le réglage des premiers moyens de support (12).

2. La machine d'étiquetage selon la revendication 1, **caractérisée en ce qu'**elle comprend aussi au moins une unité de positionnement (9) qui est fixe par rapport au châssis et étant aussi **caractérisée en ce que** les premiers moyens de support (12) comprennent un ou plusieurs premiers éléments d'appui (13) et un ou plusieurs deuxièmes éléments d'appui (14) qui sont réglables en hauteur pour permettre la mise à niveau du dispositif d'étiquetage (2), et étant aussi **caractérisée en ce que**, quand le dispositif d'étiquetage (2) est dans la position opérationnelle, chaque premier élément d'appui (13) est en appui sur l'unité de positionnement (9) et est plus proche de l'axe principal de rotation que chaque deuxième élément d'appui (14), et étant aussi **caractérisée en ce que**, quand le dispositif d'étiquetage (2) est dans la position opérationnelle, chaque deuxième élément d'appui (14) est positionné à une hauteur inférieure par rapport à chaque premier élément d'appui (13).

3. La machine d'étiquetage selon la revendication 2, **caractérisée en ce qu'**elle comprend soit une seule unité de positionnement (9) s'étendant le long du développement du carrousel (4) et permettant aux premiers éléments d'appui (13) d'être en appui au niveau d'une pluralité de positions angulaires différentes par rapport à l'axe principal de rotation, soit une pluralité d'unités de positionnement (9) distinctes permettant l'appui des premiers éléments d'appui (13) et positionnées au niveau d'une pluralité de positions angulaires différentes par rapport à l'axe principal de rotation, et étant aussi **caractérisée en ce que**, au niveau de chacune desdites positions angulaires, chaque unité de positionnement (9) a les mêmes positionnement relatif et distance par rapport au carrousel (4), de manière à ce que les premiers éléments d'appui (13) puissent maintenir le même réglage au niveau de chacune desdites positions angulaires.

4. La machine d'étiquetage selon l'une quelconque des revendications précédentes, **caractérisée en ce que** les deuxièmes moyens de support (23) comprennent au moins une structure de support (25) qui peut reposer sur le sol dans la position non opérationnelle, et au moins une portion d'appui (26) qui est fixée au corps inférieur (10) et qui peut reposer sur la structure de support (25) quand le dispositif d'étiquetage (2) est dans la position non opérationnelle, et étant aussi **caractérisée en ce que**, dans la première configuration des deuxièmes moyens de support (23), la portion d'appui (26) est désaccouplée de la structure de support (25) tandis que, dans la deuxième configuration des deuxièmes moyens de support (23), la portion d'appui (26) est en appui sur la structure de support (25).

5. La machine d'étiquetage selon la revendication 4, **caractérisée en ce que** la structure de support (25) comprend une pluralité d'éléments de support (27) s'étendant verticalement et reliés entre eux, et étant aussi **caractérisée en ce que** le corps inférieur (10) comprend une pluralité de portions d'appui (26) qui peuvent reposer sur les éléments de support (27).

6. La machine d'étiquetage selon la revendication 4 ou 5, **caractérisée en ce que** chaque portion d'appui (26) est formée par un pied fixé au corps inférieur (10).

7. La machine d'étiquetage selon la revendication 4, 5 ou 6, **caractérisée en ce que**, quand le dispositif d'étiquetage (2) est en appui sur la structure de support (25), cette dernière forme, sous le dispositif d'étiquetage (2), un espace vide (28) qui est accessible au moins d'un côté, afin de permettre l'insertion de moyens de levage sous le dispositif d'étiquetage (2).

8. La machine d'étiquetage selon l'une quelconque des revendications de 1 à 3, **caractérisée en ce que** les deuxièmes moyens de support (23) comprennent une pluralité de pieds d'appui (24) qui peuvent se déplacer entre une première position définissant la première configuration et une deuxième position définissant la deuxième configuration.

9. La machine d'étiquetage selon la revendication 8, **caractérisée en ce que** les pieds d'appui (24) peuvent se déplacer entre les première et deuxième positions par rotation autour d'un axe secondaire qui est dans la pratique essentiellement horizontal.

10. La machine d'étiquetage selon l'une quelconque des revendications précédentes, **caractérisée en ce que** le dispositif d'étiquetage (2) peut se déplacer entre la position non opérationnelle et une pluralité de positions opérationnelles, au niveau de chacune desquelles il est dans une position angulaire différente par rapport à l'axe principal de rotation.

11. La machine d'étiquetage selon l'une quelconque des revendications précédentes, **caractérisée en ce qu'**elle comprend, pour chaque dispositif d'étiquetage (2), des moyens d'accouplement et de centrage (8) qui sont fixés au châssis de support principal (3).

12. Un procédé pour changer de façon répétée la configuration d'une machine d'étiquetage (1) selon l'une quelconque des revendications précédentes, comprenant les phases opérationnelles consistant à :
associer le dispositif d'étiquetage (2) au carrousel (4) au niveau de la position opérationnelle et le mettre à niveau par rapport audit carrousel (4) par le biais des premiers moyens de support (12), afin d'obtenir une première configuration opérationnelle de la machine d'étiquetage (1) ;
déplacer le dispositif (2) dans la position non opérationnelle afin d'obtenir une deuxième configuration opérationnelle de la machine d'étiquetage (1) ;
ramener le dispositif (2) dans la position opérationnelle afin de réobtenir la première configuration de la machine d'étiquetage (1) ;
**caractérisé en ce que**, quand le dispositif (2) est déplacé dans la position non opérationnelle, le réglage des premiers moyens de support (12) est maintenu inchangé et ceux-ci sont empêchés de supporter le dispositif (2), et étant aussi **caractérisé en ce que** le réglage des premiers moyens de support (12) est également maintenu inchangé quand le dispositif (2) est successivement ramené dans la position opérationnelle.

13. Le procédé pour changer la configuration d'une machine d'étiquetage (1) selon les revendications 2 et 10, comprenant en séquence les phases opérationnelles consistant à :
associer le dispositif d'étiquetage (2) au carrousel (4) au niveau de sa première position opérationnelle et le mettre à niveau par rapport audit carrousel (4) par le biais des premiers moyens de support (12), obtenant ainsi une première configuration de la machine d'étiquetage (1) ;
déplacer le dispositif (2) dans une deuxième position opérationnelle, obtenant ainsi une deuxième configuration de la machine d'étiquetage (1) ;
**caractérisé en ce que**, quand le dispositif (2) est déplacé dans la deuxième position opérationnelle, le réglage de chaque premier élément d'appui (13) est maintenu inchangé, tandis que seul le réglage de chaque deuxième élément d'appui (14) est modifié si nécessaire.
